# EUROPÄISCHE PATENTANMELDUNG

(11) **EP 3 360 732 A1**
(43) Veröffentlichungstag der Anmeldung: **15.08.2018**
(21) Anmeldenummer: 18155733.1
(22) Anmeldetag: 08.02.2018
(51) Int. Cl.: B60R 9/06, B60R 9/10

(54) **FAHRRADTRÄGER ZUR HECKSEITIGEN ANBRINGUNG AN EINEM KRAFTFAHRZEUG**

(30) Priorität: 08.02.2017 DE 102017001152
(71) Anmelder: Paxos Consulting & Engineering GmbH & Co. Kg, 50829 Köln (DE)
(72) Erfinder: Hakenberg, Peter, 42719 Solingen (DE)
(74) Vertreter: Dieckhoff, Beate

(57) **Zusammenfassung**

Die Erfindung betrifft einen Fahrradträger (20) zur heckseitigen Anbringung an einem Kraftfahrzeug (11), wobei der Fahrradträger (20) eine Halteeinrichtung (21) aufweist, die zur Anbringung des Fahrradträgers (20) an dem Kraftfahrzeug (11) ausgebildet ist, und eine Trageinrichtung (23) zur Aufnahme eines Fahrrads (10) schwenkbar an der Halteeinrichtung (21) angebracht ist. Erfindungsgemäß ist die Trageinrichtung (23) über ein Verbindungsgelenk (40) gleichzeitig wenigstens um eine vertikale Achse und eine horizontale Achse gegenüber der Halteeinrichtung (21) schwenkbar.

## Beschreibung

Die Erfindung betrifft einen Fahrradträger zur heckseitigen Anbringung an einem Kraftfahrzeug gemäß dem Oberbegriff des Anspruchs 1.

Fahrradträger werden seit langem dazu verwendet, um ein oder mehrere Fahrräder mit einem Kraftfahrzeug zu transportieren. Dabei haben sich beispielsweise Fahrradträger zur Anbringung am Fahrzeugdach oder der Heckklappe als zweckmäßig erwiesen. Die DE 20 2015 105 297 U1 offenbart beispielsweise einen Fahrradträger, der an der Heckklappe eines PKW montiert werden kann. Bei solchen heckseitigen Fahrradträgern sind bereits verschiedene Bauformen bekannt geworden, welche jeweils unterschiedliche Probleme lösen sollen. Insbesondere soll die Handhabung des Fahrradträgers und somit das Be- und Entladen eines Trägers mit einem oder mehreren Fahrrädern erleichtert werden. Auch kann es ein Problem darstellen, dass eine Heckklappe bei angebrachtem Fahrradträger weiterhin zugänglich sein soll, um Zugang zum Inneren des Kraftfahrzeugs zu erlangen. Die DE 91 09 357 U1 offenbart hierzu beispielsweise einen schwenkbaren Fahrradträger.

Bekannte Fahrradträger lösen jedoch noch nicht das Problem, dass es für den Nutzer des Fahrradträgers oftmals schwierig ist, ein Fahrrad ohne erhebliche Kraftanstrengung auf einem Träger zu platzieren. Das gesamte Gewicht eines Fahrrads muss angehoben und auf einer Ladefläche oder einer Tragschiene abgesetzt werden. Dies ist insbesondere für schwächere und/oder kleinere Personen oftmals nur unter großer Anstrengung oder sogar überhaupt nicht möglich, so dass der Einsatz bestimmter Typen von heckseitigen Fahrradträgers nur eingeschränkt möglich ist.

Zum Be- und Entladen werden daher oftmals separate Laderampen verwendet, die an einem Fahrradträger angelegt werden, um ein Fahrrad über die Rampe auf eine Tragschiene zu schieben. Da Tragschienen von heckseitigen Fahrradträgern quer zur Längsausrichtung des Fahrzeugs verlaufen, stehen derartige Rampen bei ihrer Benutzung seitlich von dem Fahrradträger ab, wobei sie je nach Höhe des Fahrradträgers relativ steil vom Ende einer Tragschiene nach unten bis zum Boden verlaufen. Ein Fahrrad muss somit von der Seite die Rampe hochgeschoben werden, was aufgrund der Höhe der Tragschiene nach wie vor mit einem hohen Kraftaufwand verbunden ist. Darüber hinaus muss das Fahrrad nach dem Hochschieben anders gegriffen werden, um es halten und fixieren zu können. Durch eine Rampe kann so zwar das Anheben des Fahrrads vermieden werden, das Be- und Entladen kann sich jedoch nach wie vor schwierig gestalten.

Aufgabe der Erfindung ist es daher, einen heckseitigen Fahrradträger für ein Kraftfahrzeug bereitzustellen, der ein schnelles und einfaches Be- und Entladen des Trägers mit wenigstens einem Fahrrad ermöglicht.

Erfindungsgemäß wird diese Aufgabe durch einen Fahrradträger gemäß dem unabhängigen Anspruch 1 gelöst. Vorteilhafte Weiterbildungen dieses Fahrradträgers ergeben sich aus den Unteransprüchen 2-10.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Der erfindungsgemäße Fahrradträger ist zur heckseitigen Anbringung an einem Kraftfahrzeug vorgesehen. Beispielsweise erfolgt dies durch Anbringung an der Anhängerkupplung eines Fahrzeugs. Ferner können auch bekannte System zur Anbringung des Fahrradträgers an der Heckklappe und/oder dem hinteren Stoßfänger eines Fahrzeugs verwendet werden. Zur Anbringung des Fahrradträgers an einem Kraftfahrzeug weist der Fahrradträger eine Halteeinrichtung auf. Je nach vorgesehener Anbringungsart an einer Anhängerkupplung, der Heckklappe und/oder dem Stoßfänger eines Fahrzeugs ist die Halteeinrichtung entsprechend ausgebildet. Die Halteeinrichtung kann dabei auch für verschiedene Anbringungsarten ausgebildet sein, um den Fahrradträger für verschiedene Fahrzeugtypen nutzbar zu machen.

An der Halteeinrichtung ist eine Trageinrichtung zur Aufnahme eines Fahrrads angebracht. Dabei können ein oder mehrere Fahrräder aufgenommen werden, was über entsprechend ausgeformte Tragschienen, Haken, Bügel, etc. realisiert werden kann. Diese Trageinrichtung ist dabei schwenkbar an der Halteeinrichtung angebracht, wobei erfindungsgemäß vorgesehen ist, dass die Trageinrichtung über ein Verbindungsgelenk gleichzeitig wenigstens um eine vertikale Achse und eine horizontale Achse gegenüber der Halteeinrichtung schwenkbar ist. Die Trageinrichtung kann hierdurch zum Be- und Entladen von Fahrrädern so von der Halteeinrichtung am Fahrzeug weggeschwenkt werden, dass sie sich vom Fahrzeug weg und zum Boden hin bewegen lässt. Auf diese Weise kann der Abstand zwischen der Trageinrichtung und dem Boden vorteilhaft reduziert werden, was das Be- und Entladen von Fahrrädern erleichtert. Insbesondere wenn die Trageinrichtung Schienen zur Aufnahme von Fahrrädern aufweist, können diese Schienen nach dem Absenken der Trageinrichtung bis zum Boden vorteilhaft als Rampe genutzt werden. In einer Ausführungsform der Erfindung weist die Trageinrichtung daher wenigstens eine derartige Schiene bzw. Tragschiene auf, auf welcher ein Fahrrad abgestellt werden kann. Optional kann eine solche Tragschiene auch eine teleskopisch ausfahrbare Verlängerungsschiene aufweisen. Diese Verlängerungsschiene kann für eine Be- und Entladen der zugehörigen Schiene ein- und ausgefahren werden.

Gegenüber separaten Rampen, die temporär an Fahrradträgern angelegt werden, um Fahrräder auf eine Tragschiene zu schieben, hat die erfindungsgemäße Lösung verschiedene Vorteile. Einerseits muss keine separate Rampe vorgehalten und transportiert werden, sondern Schienen der Trageinrichtung können integrierte Rampen ausbilden, die jederzeit einsatzbereit sind. Ferner können separate Rampen nur seitlich am Fahrradträger angelegt werden, so dass Fahrräder auch nur von der Seite auf einen Fahrradträger geschoben bzw. von diesem herunter geschoben werden können. Hierfür muss neben dem Fahrzeug ausreichend Platz vorhanden sein, was bei oftmals nebeneinander parkenden Fahrzeugen schwierig sein kann. Bei bekannten Fahrradträgern sind separate Rampen daher in vielen Parksituationen nicht einsetzbar. Der erfindungsgemäße Fahrradträger ermöglicht hingegen ein Be- und Entladen des Fahrradträgers hinter dem Fahrzeug, wo mit größerer Wahrscheinlichkeit Platz vorhanden ist.

Um einen kompakten und im Fahrbetrieb sicheren Fahrradträger bereitzustellen, der gleichzeitig ein schnelles und einfaches Verschwenken einer Trageinrichtung gegenüber dem Fahrzeug mit der Halteeinrichtung ermöglicht, können verschiedene Bauformen gewählt werden. In einer Ausführungsform der Erfindung ist die Halteeinrichtung durch einen langgestreckten Träger ausgebildet, der quer am Heck eines Kraftfahrzeugs anbringbar ist. Die Trageinrichtung kann dann einen Grundkörper mit in horizontaler Richtung gegenüberliegenden Enden aufweisen, und der Grundkörper der Trageinrichtung ist an einem dieser Enden über das Verbindungsgelenk mit der Halteeinrichtung verbunden. Ein solcher Grundkörper kann beispielsweise als Platte, Träger oder Rahmen aus mehreren Streben ausgebildet sein, wobei sich ein langgestreckter Träger als zweckmäßig erwiesen hat. Der Träger der Halteeinrichtung und der Träger der Trageinrichtung liegen im Fahrbetrieb im Wesentlichen parallel nebeneinander, so dass sie zusammen einen kompakten Fahrradträger bilden. Insbesondere kann die Trageinrichtung dabei oberhalb der Halteeinrichtung liegen.

Die Halteeinrichtung und die Trageinrichtung sind für den Fahrbetrieb aneinander fixierbar, damit sich die Trageinrichtung beim Fahren nicht unbeabsichtigt von der Halteeinrichtung löst. Um ein Be- oder Entladen des Fahrradträgers zu beginnen, wird diese Fixierung gelöst. Der Träger der Trageinrichtung kann dann über das Verbindungsgelenk an seinem Ende soweit von dem Fahrzeug weg in Richtung Boden verschwenkt werden, dass er als Rampe verwendet werden kann. Hierfür kann der Träger der Trageinrichtung am dem Verbindungsgelenk entgegen gesetzten Ende gegriffen und verschwenkt werden. Auch ein Angreifen an einer anderen Position ist möglich, sofern diese weit genug vom Verbindungsgelenk entfernt ist, um die erforderlichen Kräfte aufzubringen. An verschiedenen Positionen an der Trageinrichtung kann hierzu ein Griff vorgesehen sein.

Das hierzu verwendete Verbindungsgelenk zwischen der Halteeinrichtung und der Trageinrichtung kann verschieden ausgeformt sein. Beispielsweise kann es eine erste Gelenkhälfte aufweisen, welche mit der Trageinrichtung verbunden und um zwei Achsen schwenkbar mit einer zweiten Gelenkhälfte verbunden ist, die wiederum mit der Halteeinrichtung verbunden ist. Die zwei Freiheitsgrade des so gebildeten Verbindungsgelenks könnten beispielsweise durch ein Kugelgelenk realisiert werden, um die Trageinrichtung in beliebige Richtungen verschwenken zu können. Alternativ kann eine Kombination aus zwei Drehgelenken eingesetzt werden. Eine Ausführungsform der Erfindung sieht daher vor, dass das Verbindungsgelenk eine erste Gelenkhälfte aufweist, welche fest mit der Trageinrichtung und um eine horizontale Achse drehbar mit einer zweiten Gelenkhälfte verbunden ist. Die erste und zweite Gelenkhälfte bilden so ein erstes Drehgelenk. Die zweite Gelenkhälfte ist wiederum um eine vertikale Achse drehbar mit der Halteeinrichtung verbunden, so dass die zweite Gelenkhälfte und die Halteeinrichtung ein zweites Drehgelenk ausbilden.

Um das Verschwenken der Trageinrichtung und auch das Halten des Gewichts der Trageinrichtung mit darauf angebrachten Fahrrädern zu erleichtern, können an dem Fahrradträger Mittel zur Abstützung des Gewichts der Trageinrichtung beim Verschwenken vorgesehen sein. Hierbei kann es sich beispielsweise um Stützflächen oder Führungen handeln, die Bereiche der Trageinrichtung beim Verschwenken abstützen. Insbesondere kann vorgesehen sein, dass die Trageinrichtung mit einem Führungsbereich versehen ist, der beim Verschwenken der Trageinrichtung Kontakt zu einer geneigten Führungsbahn hat und sich entlang dieser Führungsbahn bewegt. Beispielsweise kann eine solche Führungsbahn hierbei eine geneigte Rampe aufweisen, auf deren Oberseite der Führungsbereich entlang gleitet. Auf diese Weise stützt sich das Gewicht der Trageinrichtung auf der Rampe ab. Dies ist beim Lösen der Trageinrichtung von der Halteeinrichtung vorteilhaft, da der Träger der Trageinrichtung so kontrolliert und gleichmäßig in Richtung Boden gleiten kann. Beim Beladen des Fahrradträgers mit einem Fahrrad ist eine solche Stützrampe ebenfalls vorteilhaft, da sie einem Nutzer das Anheben der Trageinrichtung erleichtert. Greift ein Nutzer die Trageinrichtung und zieht sie zur Halteeinrichtung hin, wird die Trageinrichtung durch die schiefe Ebene der Stützrampe automatisch angehoben.

Der Führungsbereich und die Führungsbahn können auf verschiedene Arten ausgebildet werden. Der Führungsbereich kann beispielsweise durch einen abgerundeten Bolzen geformt sein. Mit der abgerundeten Fläche des Bolzens kann dieser gut an einer Führungsbahn entlang gleiten, wobei die Reibfläche minimiert wird. Dabei ist der Führungsbereich in einer bevorzugten Ausführungsform der Erfindung an der Trageinrichtung ausgebildet, während die Führungsbahn an der Halteeinrichtung ausgebildet ist. Auf diese Weise nimmt die Kombination aus Führungsbahn und daran entlang gleitendem Führungsbereich wenig Platz ein.

In einer Ausführungsform der Erfindung weist die Führungsbahn dabei an einem oberen Ende einen horizontal verlaufenden Bereich auf, an den sich ein nach unten geneigter Bereich anschließt. Wird die Trageinrichtung verschwenkt, gleitet der Führungsbereich erst über den horizontalen Bereich, wodurch ein ausreichend großer Abstand zum Heck des Fahrzeugs hergestellt wird. Danach senkt sich die Trageinrichtung durch Abgleiten an dem nach unten geneigten Bereich in Richtung Boden ab. Der Führungsbereich bewegt sich beim Verschwenken in einem Bogen um eine vertikale Achse. Daher ist in einer Ausführungsform der Erfindung vorgesehen, dass auch die Führungsbahn wenigstens teilweise in einem Bogen um eine vertikale Achse verläuft. Die Lage der Führungsbahn kann ferner auch gegenüber der zweiten Gelenkhälfte in vertikaler Richtung veränderlich ausgeführt sein.

Dabei beziehen sich die verwendeten Begriffe "horizontal", "vertikal", "oben" und "unten" auf den Fahrradträger im Einbauzustand, d.h. wenn er heckseitig an einem Kraftfahrzeug angebracht ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine dreidimensionale Vorderansicht einer Ausführungsform eines erfindungsgemäßen Fahrradträgers;
- Fig. 2: eine dreidimensionale Rückansicht des Fahrradträgers gemäß Fig. 1;
- Fig. 3A: eine dreidimensionale Ansicht eines an einem Kraftfahrzeug angebrachten Fahrradträgers in der Gebrauchsstellung;
- Fig. 3B: einen Fahrradträger gemäß Fig. 3A mit ausgefahrenen Verlängerungsschienen;
- Fig. 3C: einen Fahrradträger gemäß Fig. 3B beim Verschwenken;
- Fig. 3D: einen Fahrradträger gemäß Fig. 3B nach dem Aufsetzen auf den Boden;
- Fig. 4D: eine asymmetrische Ansicht einer Ausführungsform eines Verbindungsgelenks zum Verschwenken des erfindungsgemäßen Fahrradträgers in der Gebrauchsstellung des Fahrradträgers;

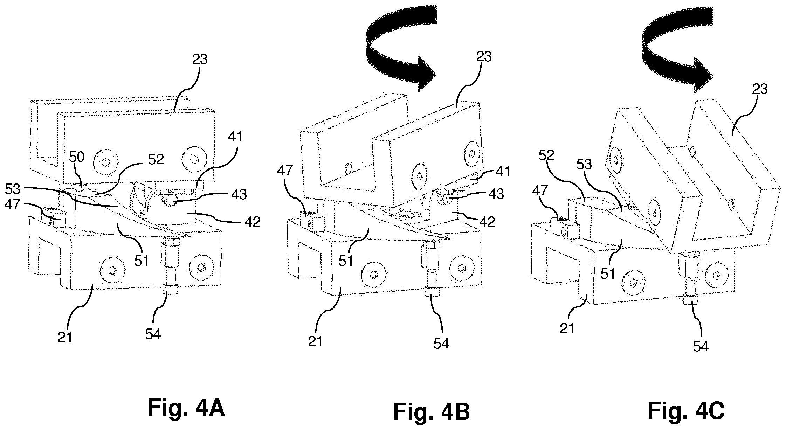

- Fig. 4B: ein Verbindungsgelenk gemäß Fig. 4A in einer Zwischenstellung beim Verschwenken des Fahrradträgers;
- Fig. 4C: ein Verbindungsgelenk gemäß Fig. 4A in einer Endstellung beim Aufsetzen des Fahrradträgers auf dem Boden;

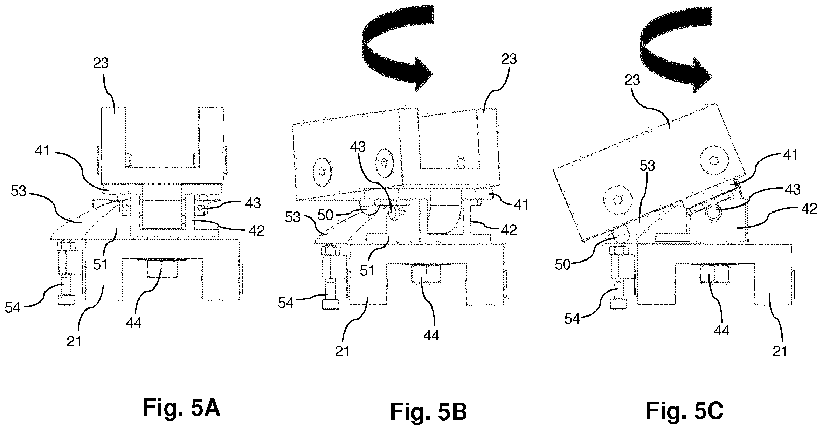

- Fig. 5A: eine Seitenansicht eines Verbindungsgelenks gemäß Fig. 4A in der Gebrauchsstellung des Fahrradträgers;
- Fig. 5B: eine Seitenansicht eines Verbindungsgelenks gemäß Fig. 5A in einer Zwischenstellung beim Verschwenken des Fahrradträgers;
- Fig. 5C: eine Seitenansicht eines Verbindungsgelenks gemäß Fig. 5A in einer Endstellung beim Aufsetzen des Fahrradträgers auf dem Boden;

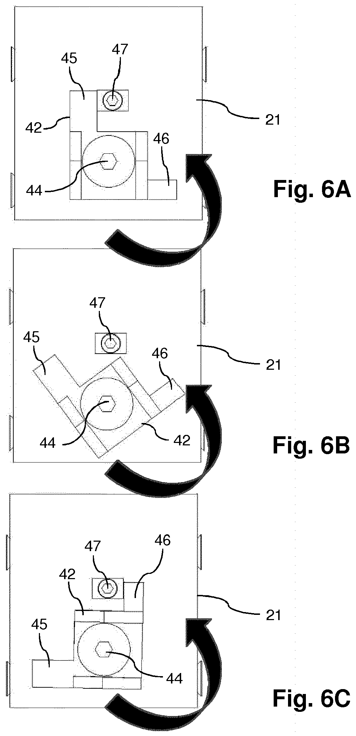

- Fig. 6A: eine Aufsicht auf ein Verbindungsgelenk gemäß Fig. 4A in der Gebrauchsstellung des Fahrradträgers;
- Fig. 6B: eine Aufsicht auf ein Verbindungsgelenk gemäß Fig. 6A in einer Zwischenstellung beim Verschwenken des Fahrradträgers; und
- Fig. 6C: eine Aufsicht auf ein Verbindungsgelenk gemäß Fig. 6A in einer Endstellung beim Aufsetzen des Fahrradträgers auf dem Boden.

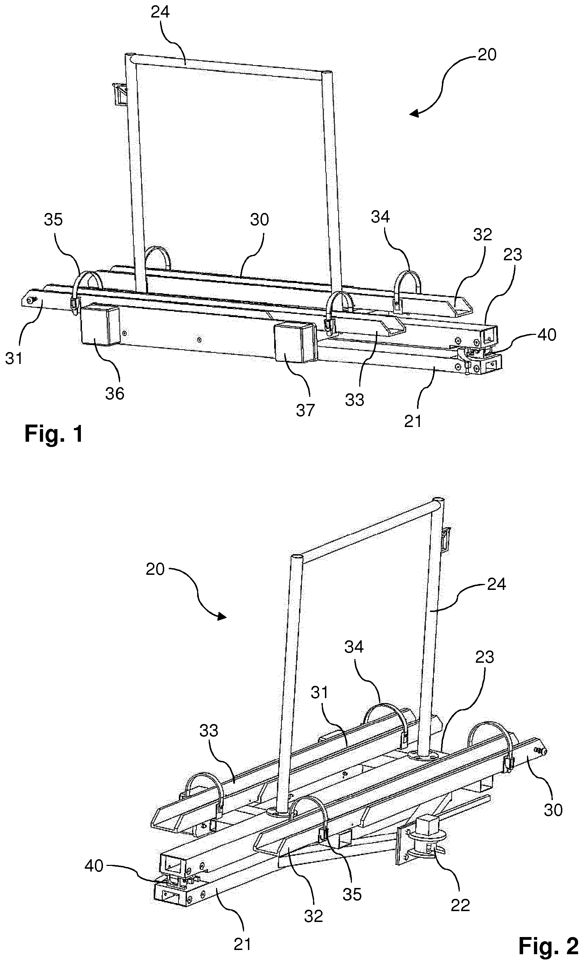

Der Fig. 1 ist eine Vorderansicht einer Ausführungsform eines erfindungsgemäßen Fahrradträgers 10 zu entnehmen. Dieser Fahrradträger 10 kann mit einer Halteeinrichtung am Heck eines nicht dargestellten Kraftfahrzeugs montiert werden. Fig. 2 zeigt diesen Fahrradträger in einer Rückansicht, wobei die Rückansicht bei Montage des Fahrradträgers an einem Kraftfahrzeug zum Heck dieses Fahrzeugs weist. Die Vorderansicht ist bei Blick auf den montierten Fahrradträger 10 sichtbar.

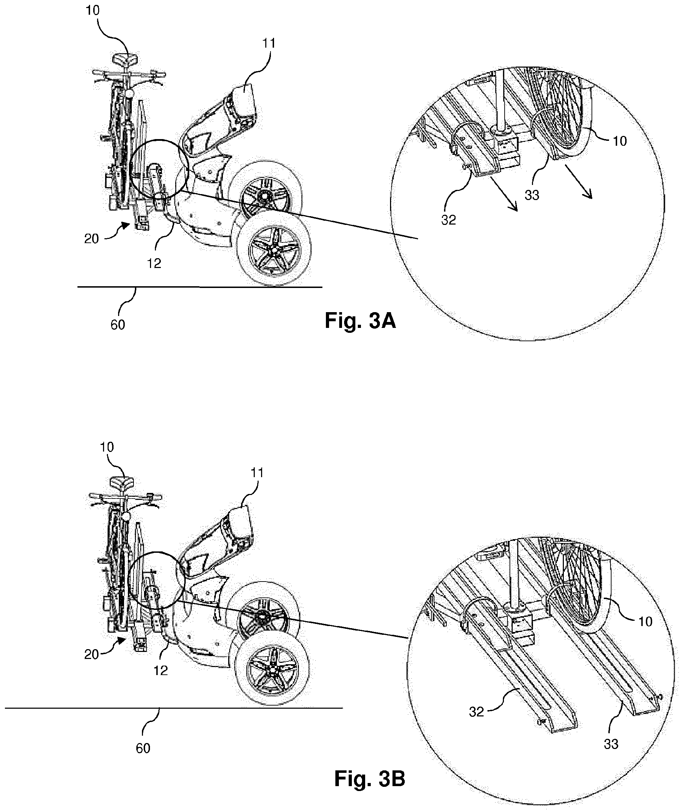

Beispielsweise kann der Fahrradträger 10 an der Anhängerkupplung 12 eines Kraftfahrzeugs 11 montiert werden, wie es den Figuren 3A - 3D zu entnehmen ist. Dabei zeigt die Fig. 1 den Fahrradträger in der Gebrauchsstellung, d.h. in einer Stellung, in welcher der Fahrradträger 10 mit oder ohne Fahrräder so am Kraftfahrzeug positioniert ist, dass das Kraftfahrzeug mit dem Fahrradträger gefahren werden kann. Im Gegensatz dazu hat der Fahrradträger auch eine Beladestellung, in welcher der Fahrradträger 10 mit wenigstens einem Fahrrad beladen oder ein Fahrrad entladen werden kann. In dieser Beladestellung sollte das Kraftfahrzeug nicht bewegt werden.

Der Fahrradträger 10 ist im Wesentlichen aufgebaut aus einer Halteeinrichtung 21 und einer Trageinrichtung 23, die über ein Verbindungsgelenk 40 miteinander verbunden sind. Die Halteeinrichtung 21 wird am Kraftfahrzeug angebracht, während die Trageinrichtung 23 dazu ausgebildet ist, wenigstens ein Fahrrad aufzunehmen. Zur Anbringung der Halteeinrichtung 21 am Kraftfahrzeug ist an dieser wenigstens ein Kupplungselement 22 vorgesehen. Sowohl die Haltevorrichtung 21 als auch die Trageinrichtung 23 werden durch langgestreckte Träger gebildet, die in der Gebrauchsstellung im Wesentlichen parallel nebeneinander verlaufen. In der Ausführungsform der Figuren liegt die Trageinrichtung 23 dabei oberhalb der Halteeinrichtung 21.

Die Trageinrichtung 23 und die Halteeinrichtung 21 sind jeweils durch hohle Träger gebildet, um das Gewicht des Fahrradträgers gering zu halten. Beispielsweise handelt es sich um U-Profile mit einem langen Abschlussblech an ihrer offenen Seite. Ferner sind an der Trageinrichtung 23 zwei parallel verlaufende Tragschienen 30 und 31 angebracht. Diese Tragschienen 30, 31 befinden sich in der dargestellten Ausführungsform etwas oberhalb des Trägers der Trageinrichtung 23, wobei sie neben dem Träger verlaufen. Die Tragschienen 30, 31 sind soweit zueinander beabstandet, dass jeweils ein Fahrrad auf einer Tragschiene abgestellt werden kann.

Die Tragschienen 30, 31 sind beispielsweise durch nach oben offene U-Profile ausgebildet, in welche Fahrräder mit ihren Rädern eingestellt werden können. Um die Fahrräder in den Schienen zu sichern, sind bogenförmige Haltebügel vorgesehen, die nach oben von den Tragschienen abstehen und die Schienen überspannen. Beispielsweise sind an jeder Tragschiene 30, 31 zwei Haltebügel vorgesehen, von denen in der Fig. 1 jeweils ein Haltebügel mit den Bezugsziffern 34 und 35 gekennzeichnet ist. Diese Haltebügel 34, 35 sind an wenigstens einem Ende von der jeweiligen Tragschiene 30, 31 abtrennbar und zwischen den Speichen eines Fahrrads durchführbar, wie es beispielsweise der Darstellung eines Vorderrads eines Fahrrads in der Fig. 3A zu entnehmen ist. In dieser Stellung können die Haltebügel 34, 35 ein unerwünschtes Bewegen der Fahrräder verhindern.

An der Trageinrichtung 23 ist ferner ein nach oben abstehender Bügel 24 angebracht. Dieser Bügel 24 wird durch einen U-förmigen Rahmen aus drei Streben gebildet. An diesem Bügel 24 können die Fahrräder fixiert werden. Der Bügel 24 kann auch als Griff zum Verschwenken der Trageinrichtung genutzt werden bzw. an dem Bügel kann ein Griff vorgesehen werden. Darüber hinaus weist die Trageinrichtung 23 zwei Rückleuchten 36 und 37 auf, die über einen entsprechenden Stecker an das Fahrzeugbordnetz angeschlossen werden können. Zwischen den beiden Rückleuchten 36, 37 kann ein Nummernschild angebracht werden (nicht dargestellt).

Die Länge der Tragschienen 30, 31 kann vergrößert werden, indem jeweils Verlängerungsschienen 32 und 33 teleskopisch aus den Tragschienen 30, 31 herausgefahren werden. In der Gebrauchsstellung des Fahrradträgers 10 sind diese Verlängerungsschienen 32, 33 in die Tragschienen 30, 31 eingefahren. Sie können beim Be- und Entladen ausgefahren werden, um als Rampe zu dienen. Der vergrößerte Ausschnitt in der Fig. 3A zeigt solche Verlängerungsschienen 32, 33 im eingefahrenen Zustand, währen Fig. 3B diese Verlängerungsschienen 32, 33 im ausgefahrenen Zustand zeigt.

Fig. 3A zeigt dabei einen Fahrradträger 20 am Heck eines Fahrzeugs 11, wobei der Fahrradträger 20 an der Anhängerkupplung 12 angebracht ist. Auf dem Fahrradträger 20 steht ein Fahrrad 10 auf einer Tragschiene. Der Fahrradträger 20 befindet sich in der Gebrauchsstellung, in welcher das Fahrzeug gefahren werden kann. Soll das Fahrrad 10 entladen werden, wird eine Fixierung zwischen der Trageinrichtung und der Halteeinrichtung gelöst. Ferner werden die Verlängerungsschienen 32, 33 ausgefahren (Fig. 3B).

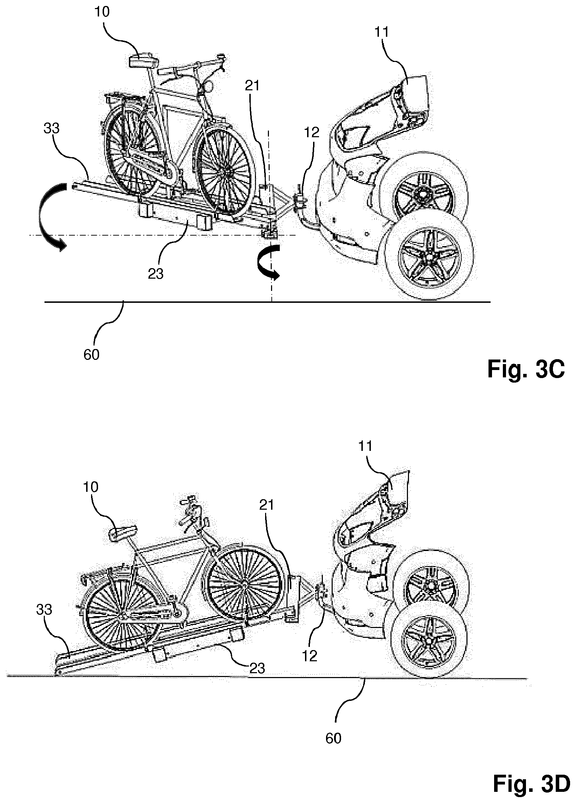

Die Trageinrichtung 23 wird von der Halteeinrichtung 21 weggeschwenkt, wobei sich die Trageinrichtung 23 gleichzeitig in Richtung Boden 60 absenkt. Diese Drehbewegung ist in Fig. 3C durch zwei Drehpfeile verdeutlicht. Fig. 3D zeigt den Fahrradträger in der Entladestellung, in welcher der Fahrradträger 20 hinter dem Kraftfahrzeug 11 liegt. Die ausgefahrene Verlängerungsschiene 33 setzt dabei auf den Boden 60 auf. In dieser Stellung kann das Fahrrad 10 nun von der Tragschiene und der Verlängerungsschiene 33 heruntergeschoben werden. Zum Beladen des Fahrradträgers 20 könnte ein Fahrrad in dieser Stellung auch die so geformte Rampe hochgeschoben werden. Die Trageinrichtung 23 kann dann in Richtung Halteeinrichtung 21 geschwenkt werden, wobei sie sich zusammen mit dem Fahrrad anhebt.

Die Figuren 4A - 4C zeigen das für die Verschwenkbarkeit der Trageinrichtung 23 gegenüber der Halteeinrichtung 21 verwendete Verbindungsgelenk in asymmetrischen Ansichten, wobei verschiedene Stellungen des Verbindungsgelenks gezeigt sind. Die Figuren 4A - 4C zeigen diese Stellungen des Verbindungsgelenks in jeweiligen Seitenansichten. Das Verbindungsgelenk 40 wird im Wesentlichen durch eine erste Gelenkhälfte und eine zweite Gelenkhälfte gebildet. Bei den Gelenkhälften kann es sich um Bauteile handeln, die mit der Trageinrichtung 23 und der Halteeinrichtung 21 verbunden sind. Die Gelenkhälften können jedoch auch durch die Träger (U-Profile) der Trageinrichtung 23 und der Halteeinrichtung 21 selbst gebildet werden.

Im Ausführungsbeispiel der Figuren 4A - 4C und 5A - 5C ist eine erste Gelenkhälfte 41 an der Unterseite der Trageinrichtung 23 vorgesehen und fest mit dieser verbunden. Die Trageinrichtung 23 und die Gelenkhälfte 41 können somit zusammen als erste Gelenkhälfte angesehen werden. Eine zweite Gelenkhälfte 42 ist drehbar an der Halteeinrichtung 21 angebracht. Diese zweite Gelenkhälfte 42 wird durch ein U-Profil gebildet, dessen Schenkel nach oben von der Halteeinrichtung 21 abstehen. Durch diese Schenkel ist ein Bolzen geführt, um eine horizontal verlaufende Schwenkachse 43 zu bilden. Die erste Gelenkhälfte 41 ist über diese Achse 43 schwenkbar an dem U-Profil der zweiten Gelenkhälfte 42 gelagert. Die zweite Gelenkhälfte 42 selbst ist um eine vertikale Schwenkachse 44 gegenüber der Halteeinrichtung 21 drehbar. So lässt sich die Trageinrichtung 23 über die beiden Gelenkhälften 41, 42 um eine vertikale Achse 44 und eine horizontale Achse 43 gegenüber der Halteeinrichtung 21 verschwenken.

Ferner ist an der Oberseite der Halteeinrichtung 21 eine Führungsbahn 51 angebracht, die einen geneigten Führungsbereich 53 aufweist und so eine Rampe ausbildet. Am oberen Ende dieses Führungsbereichs 53 befindet sich ein horizontal verlaufender Bereich 52. Der geneigte Führungsbereich 53 verläuft in einem Bogen um eine vertikale Achse. An der Unterseite der Trageinrichtung 23 ist durch einen Bolzen 50 ein Führungsbereich ausgebildet, der Kontakt zur Führungsbahn 51 hat. Dieser Bolzen 50 weist eine abgerundete Kuppe auf, die beim Verschwenken der Trageinrichtung 23 gegenüber der unteren Gelenkhälfte 42 auf der Führungsbahn 51 aufliegt und an dieser entlanggleitet.

Die Figuren 4A und 5A zeigen das Verbindungsgelenk in der Gebrauchsstellung des Fahrradträgers. In dieser Stellung liegt die Trageinrichtung 23 mit dem Bolzen 50 auf dem horizontalen Bereich 52 der Führungsbahn 51 auf. Wird die Trageinrichtung 23 verschwenkt, wie es in den Figuren 4B und 5B durch einen Drehpfeil gezeigt ist, dreht sich das U-Profil der zweiten Gelenkhälfte 42 um die Schwenkachse 44. Zunächst gleitet der Bolzen 50 dabei über den horizontalen Bereich 52 der Führungsbahn 51, um die Trageinrichtung 23 so ausreichend weit vom Heck des Fahrzeugs zu entfernen. Bei Erreichen der geneigten Führungsbahn 53 senkt sich die obere Gelenkhälfte 41 mit der Trageinrichtung 23 nach unten ab, wobei sie um die Schwenkachse 43 nach unten kippen. Im weiteren Verlauf findet ein gleichzeitiges Verschwenken der Trageinrichtung 23 in den beiden Achsen 43 und 44 statt, wie es durch einen Drehpfeil in den Figuren 4C und 5C gezeigt ist. Dabei bewegt sich der Bolzen 50 bis zum unteren Ende der geneigten Führungsbahn 53. Durch den bogenförmigen Verlauf der Führungsbahn verläuft auch die Bewegung des Bolzens 50 in einem Bogen um eine vertikale Achse. Die Führungsbahn 51 ist insgesamt höhenverstellbar ausgeführt, wozu eine Stellschraube 54 verwendet wird.

Beim Verschwenken der Trageinrichtung zur Halteeinrichtung hin erfolgt der beschriebene Bewegungsablauf in umgekehrter Richtung. Dabei wird die Trageinrichtung durch das Hochgleiten des Bolzens 50 an dem geneigten Führungsbereich 53 angehoben.

Zur Begrenzung der Drehbewegung der zweiten Gelenkhälfte 42 gegenüber der Halteeinrichtung 21 können ein oder mehrere Anschläge vorgesehen werden. Die Figuren 6A - 6B zeigen beispielsweise eine Aufsicht auf die zweite Gelenkhälfte 42 und die darunterliegende Halteeinrichtung 21, wobei zur Begrenzung der Drehbewegung des U-Profils der zweiten Gelenkhälfte 42 ein Anschlag 47 vorgesehen ist. Dieser Anschlag 47 ist auch den Ansichten der Figuren 4A - 4B zu entnehmen und wird durch einen quaderförmigen Block gebildet, der auf der Oberseite der Halteeinrichtung 21 angebracht ist. An dem U-Profil der zweiten Gelenkhälfte 42 sind zwei Stege 45 und 46 ausgebildet, die von dem U-Profil abstehen und in einem Winkel von 90° zueinander verlaufen. In der Gebrauchsstellung des Fahrradträgers (Fig. 6A) liegt der Steg 45 am Anschlag 47 an, so dass die zweite Gelenkhälfte 42 und damit die Trageinrichtung nicht weiter in Richtung Heck des Fahrzeugs gedreht werden kann. Beim Verschwenken der Trageinrichtung löst sich der Steg 45 vom Anschlag 47, wobei die Trageinrichtung soweit gedreht werden kann, bis der andere Steg 46 an der gegenüberliegenden Seite des Anschlags 47 anschlägt. Auf diese Weise kann ein Verdrehen der unteren Gelenkhälfte 42 und damit der Trageinrichtung auf einem Winkelbereich von maximal 90° beschränkt werden. So ist auch sichergestellt, dass der Bolzen 50 nicht am unteren Ende von der geneigten Führungsbahn 51 abgleitet.

### Bezugszeichenliste:

- 10: Fahrrad
- 11: Kraftfahrzeug
- 12: Anhängerkupplung
- 20: Fahrradträger
- 21: Halteeinrichtung
- 22: Kupplungselement
- 23: Trageinrichtung
- 24: Bügel
- 30,31: Tragschiene
- 32,33: Verlängerungsschiene
- 34,35: Haltebügel
- 36,37: Rückleuchte
- 40: Verbindungsgelenk
- 41: Erste Gelenkhälfte
- 42: Zweite Gelenkhälfte, U-Profil
- 43: Horizontale Schwenkachse
- 44: Vertikale Schwenkachse
- 45,46: Steg
- 47: Anschlag
- 50: Führungsbereich, Bolzen
- 51: Führungsbahn
- 52: Horizontaler Bereich
- 53: Geneigter Führungsbereich, Rampe
- 54: Stellschraube
- 60: Boden

## Patentansprüche

1. Fahrradträger (20) zur heckseitigen Anbringung an einem Kraftfahrzeug (11), wobei der Fahrradträger (20) eine Halteeinrichtung (21) aufweist, die zur Anbringung des Fahrradträgers (20) an dem Kraftfahrzeug (11) ausgebildet ist, und eine Trageinrichtung (23) zur Aufnahme eines Fahrrads (10) schwenkbar an der Halteeinrichtung (21) angebracht ist,
**dadurch gekennzeichnet, dass** die Trageinrichtung (23) über ein Verbindungsgelenk (40) gleichzeitig wenigstens um eine vertikale Achse und eine horizontale Achse gegenüber der Halteeinrichtung (21) schwenkbar ist.

2. Fahrradträger nach Anspruch 1,
**dadurch gekennzeichnet, dass** die Halteeinrichtung (21) durch einen langgestreckten Träger ausgebildet ist, der quer am Heck eines Kraftfahrzeugs (11) anbringbar ist.

3. Fahrradträger nach Anspruch 2,
**dadurch gekennzeichnet, dass** die Trageinrichtung (23) einen Grundkörper mit in horizontaler Richtung gegenüberliegenden Enden aufweist, und der Grundkörper an einem dieser Enden über das Verbindungsgelenk (40) mit der Halteeinrichtung (21) verbunden ist.

4. Fahrradträger nach Anspruch 3,
**dadurch gekennzeichnet, dass** das Verbindungsgelenk (40) eine erste Gelenkhälfte aufweist, welche fest mit der Trageinrichtung (23) und um eine horizontale Achse (43) drehbar mit einer zweiten Gelenkhälfte (42) verbunden ist, wobei die zweite Gelenkhälfte (42) um eine vertikale Achse (44) drehbar mit der Halteeinrichtung (21) verbunden ist.

5. Fahrradträger nach einem oder mehreren der Ansprüche 1 bis 4,
**dadurch gekennzeichnet, dass** die Trageinrichtung (23) mit einem Führungsbereich (50) versehen ist, der beim Verschwenken der Trageinrichtung (23) Kontakt zu einer geneigten Führungsbahn (51) hat und sich entlang dieser Führungsbahn (51) bewegt.

6. Fahrradträger nach Anspruch 5,
**dadurch gekennzeichnet, dass** die Führungsbahn (51) eine geneigte Rampe (53) aufweist, auf deren Oberseite der Führungsbereich (50) entlang gleitet.

7. Fahrradträger nach Anspruch 6,
**dadurch gekennzeichnet, dass** der Führungsbereich (50) durch einen abgerundeten Bolzen gebildet ist.

8. Fahrradträger nach einem oder mehreren der Ansprüche 5 bis 7,
**dadurch gekennzeichnet, dass** der Führungsbereich (50) an der Trageinrichtung (23) ausgebildet ist, während die Führungsbahn (51) an der Halteeinrichtung (21) ausgebildet ist.

9. Fahrradträger nach einem oder mehreren der Ansprüche 5 bis 8,
**dadurch gekennzeichnet, dass** die Führungsbahn (51) an einem oberen Ende einen horizontal verlaufenden Bereich (52) aufweist, an den sich ein nach unten geneigter Bereich (53) anschließt.

10. Fahrradträger nach einem oder mehreren der Ansprüche 5 bis 9,
**dadurch gekennzeichnet, dass** die Führungsbahn (51) wenigstens teilweise in einem Bogen um eine vertikale Achse verläuft.
